# EUROPÄISCHE PATENTSCHRIFT

(11) **EP 3 630 527 B1**
(45) Veröffentlichungstag und Bekanntmachung des Hinweises auf die Patenterteilung: **06.05.2026**
(21) Anmeldenummer: 18725846.2
(22) Anmeldetag: 18.05.2018
(51) Int. Cl.: B60L 58/10, B60L 58/19, B60L 58/21, H02J 7/50, H02J 7/62, B60L 3/00, B60L 3/04, B60L 50/60

(54) **FAHRZEUGENERGIESPEICHER**
VEHICLE ENERGY STORAGE
DISPOSITIF DE STOCKAGE D'ÉNERGIE POUR UN VÉHICULE

(30) Priorität: 31.05.2017 DE 102017209183
(43) Veröffentlichungstag der Anmeldung: 08.04.2020
(73) Patentinhaber: Bayerische Motoren Werke Aktiengesellschaft, 80809 München (DE)
(72) Erfinder: LOPEZ DE ARROYABE, Jose, 81541 München (DE)
(74) Vertreter: Kilian Kilian & Partner mbB
(86) Internationale Anmeldenummer: PCT/EP2018/063240
(87) Internationale Veröffentlichungsnummer: WO 2018/219701

(56) Entgegenhaltungen:
- EP-A1- 2 910 405
- EP-A1- 2 910 405
- EP-A2- 2 403 105
- EP-A2- 2 403 105
- DE-A1- 102011 011 799
- DE-A1- 102011 115 550
- DE-A1- 102011 115 550
- DE-A1- 102012 205 957
- DE-A1- 102012 205 957
- DE-A1- 102012 213 053
- DE-A1- 102012 213 053
- US-A1- 2017 120 770
- US-A1- 2017 120 770
- ANONYMOUS: "Intelligente Stromerfassungs- und -überwachungstechnologien | DigiKey", 6 October 2016 (2016-10-06), pages 1 - 8, XP055933758, Retrieved from the Internet <URL:https://www.digikey.ch/de/articles/how-to-select-smart-current-sensing-monitoring-technologies> [retrieved on 20220621]
- FALSE: "Op-Amp Adds Short-Circuit Protection to High-Side Switch", 9 July 1998 (1998-07-09), pages 1 - 2, XP055933871, Retrieved from the Internet <URL:https://www.maximintegrated.com/en/design/technical-documents/app-notes/3/38.html> [retrieved on 20220621]

## Beschreibung

Die vorliegende Erfindung betrifft einen Fahrzeugenergiespeicher, insbesondere einen Fahrzeugenergiespeicher zur elektrischen Versorgung eines elektrischen Antriebsaggregats eines Kraftfahrzeuges.

Im Stand der Technik sind eine Reihe von Batteriekonfigurationen, die als Fahrzeugenergiespeicher für Kraftfahrzeuge fungieren, bekannt.

Beispielsweise werden im Stand der Technik 96 Batteriezellen in Reihe geschaltet (Topologie 1). In dieser Konfiguration werden die Batteriezellen zusammen zur elektrischen Versorgung eines elektrischen Antriebsaggregats eines Kraftfahrzeuges verwendet.

Entwicklungen von elektrischen Kraftfahrzeugen, die in jüngerer Vergangenheit aufgrund ökologischer Erwägungen und immer knapper werdenden fossilen Rohstoffen stark vorangetrieben werden, erfordern immer mehr Leistung und eine höhere Energiedichte. Um diesen Erfordernissen gerecht zu werden, kommen in zunehmendem Maße Batteriekonfigurationen mit mehreren parallel geschalteten Batteriezellen zum Einsatz. Diesbezüglich sind beispielsweise zwei verschiedene Arten von Batteriekonfigurationen bekannt.

Zum einen werden vier Batteriezellen parallel geschaltet, sodass sie eine Gruppe bilden. Anschließend werden beispielsweise 96 solcher Gruppen in Reihe geschaltet (Topologie 2).

Zum anderen werden beispielsweise 96 einzelne Batteriezellen in Reihe geschaltet, sodass sie einen Strang bilden. Anschließend werden vier solcher Stränge zueinander parallel geschaltet (Topologie 3).

Die damit erzielte Erhöhung der Leistung und Energiedichte der Batteriekonfigurationen führt gleichermaßen zu erhöhten Kurzschlussströmen, die beispielsweise bei einem Unfall potentiell auftreten können. Bei typischen im Bereich von Kraftfahrzeugen verwendeten Spannungen in der Größenordnung von 400V betragen die Kurzschlussströme bei der zuerst erläuterten Batteriekonfiguration (Topologie 1) ca. 4000A. Um diese Kurzschlussströme zuverlässig zu trennen, werden auf dem Markt erhältliche Schütze und Sicherungen stark gefordert.

Kommen weitere parallel geschaltete Batteriezellen, wie bei den zwei weiteren im Vorhergehenden erläuterten Batteriekonfigurationen (Topologie 2 und 3), hinzu, erhöhen sich die Kurzschlussströme auf bis zu 30.000A. In dieser Größenordnung der handzuhabenden Ströme kommen Schütze und Sicherungen an die Grenzen des Machbaren. Zum einen können die Schütze nicht schnell genug auslösen und müssen deshalb eine ausreichende Stromfestigkeit besitzen, bis die Sicherung anspricht. Zum anderen ist es selbst für Sicherungen schwierig, Ströme in dieser Höhe zuverlässig zu trennen. Außerdem müssen Kabelbäume und Stecker, die im Kraftfahrzeug verbaut sind, diese großen Kurzschlussströme aushalten und deshalb auch entsprechend dimensioniert werden. Vor allem sind Stecker in diesem Zusammenhang ein Problem.

Dementsprechend sind im Stand der Technik andere Lösungen, die ohne Schütze und Sicherungen auskommen und solche Kurzschlussströme handhaben können, entwickelt worden. Diese Lösungen basieren auf pyrotechnischen Schaltern, die im Kurzschlussfall die Anschlüsse von der Batterie absprengen. In der Natur der Sache liegt es, dass solche pyrotechnischen Schalter nur ein einziges Mal ausgelöst werden können und anschließend einer Erneuerung bedürfen.

Zu den genannten Problemen kommt noch hinzu, dass bei den erläuterten Batteriekonfigurationen, insbesondere Topologie 1 und 2, die Höhe des Auslösestromes, bei dem es zu der Auslösung der Trennung der Batterie kommt, unter Berücksichtigung eines Sicherheitsfaktors festgelegt werden muss. Der Sicherheitsfaktor liegt in einer Größenordnung von 10% und ist darin begründet, dass sich der durch die Batterie fließende Strom asymmetrisch auf die parallelen Batteriezellen verteilen kann, hierüber aber keine genaue Kenntnis besteht. Insoweit kann bei den Batteriekonfigurationen die Batterieleistung auch nicht voll ausgeschöpft werden.

Weiterer Stand der Technik findet sich in den folgenden Dokumenten
DE 10 2011 115550 A1, DE 10 2012 213053 A1, EP2 910 405 A1, EP 2 403 105 A2 und DE 20 2011 011 799 A1.

Diese Dokumente beschreiben Batteriepacks mit Schutzvorrichtungen vor Überstrom.

Das Dokument XP055933758 beschreibt eine Überstromdetektion per Operationsverstärker.

Vor diesem Hintergrund liegt der vorliegenden Erfindung die Hauptaufgabe zugrunde, einen Fahrzeugenergiespeicher zu schaffen, der eine zuverlässige und zerstörungsfreie Trennung bei auftretenden hohen Strömen zulässt. Weiterhin liegt der vorliegenden Erfindung die Nebenaufgabe zu Grunde, eine gute Ausschöpfung der zur Verfügung stehenden Batterieleistung zu ermöglichen.

Die Hauptaufgabe wird mit einem Fahrzeugenergiespeicher gemäß Patentanspruch 1 gelöst. Weitere bevorzugte Ausführungsformen sind Gegenstand der abhängigen Patentansprüche.

Gemäß einem Aspekt der Erfindung beinhaltet ein Fahrzeugenergiespeicher zur elektrischen Versorgung eines elektrischen Antriebsaggregats eines Kraftfahrzeuges:
*einen Anschluss positiven Potentials und einen Anschluss negativen Potentials, die bei bestimmungsgemäßem Betrieb des Fahrzeugenergiespeichers an das Antriebsaggregat angeschlossen sind;*
*einen ersten Strang, der den Anschluss positiven Potentials und den Anschluss negativen Potentials miteinander verbindet und in dem mindestens eine elektrische Energiespeicherzelle angeordnet ist; und*
*mindestens einen zweiten Strang, der parallel zu dem ersten Strang den Anschluss positiven Potentials und den Anschluss negativen Potentials miteinander verbindet und in dem ebenfalls mindestens eine elektrische Energiespeicherzelle angeordnet ist; wobei*
*in dem ersten Strang und dem zweiten Strang jeweils mindestens ein Halbleiterschalterelement angeordnet ist, das zur Unterbrechung eines in dem jeweiligen Strang fließenden Stromes ansteuerbar ist.*

Der erfindungsgemäße Fahrzeugenergiespeicher kann neben dem ersten Strang und dem zweiten Strang bevorzugt auch noch einen dritten und vierten Strang aufweisen. Sowohl der dritte als auch vierte Strang verbindet parallel zu dem ersten und zweiten Strang den Anschluss positiven Potentials mit dem Anschluss negativen Potentials. Ganz allgemein gesagt kann der erfindungsgemäße Fahrzeugenergiespeicher neben dem ersten und zweiten Strang eine Vielzahl von weiteren, parallelen Strängen beinhalten, in denen mindestens eine elektrische Energiespeicherzelle angeordnet ist.

Die von dem erfindungsgemäßen Fahrzeugenergiespeicher gelieferte Spannung beträgt vorzugsweise 400V.

Der erste und zweite Strang können insbesondere im Hinblick auf die Anzahl der Energiespeicherzellen identisch oder unterschiedlich aufgebaut sein. Gleiches gilt für den dritten und/oder vierten Strang bzw. die Vielzahl von weiteren Strängen.

Unter Energiespeicherzelle wird eine bauliche Einheit verstanden, die ein Gehäuse aufweist, in dem beispielsweise eine Elektrolytlösung (bsp. eines Lithium-Akkumulator) enthalten ist und auf dem die entsprechenden Elektroden zum Anschließen der Energiespeicherzellen angeordnet sind.

Ganz besonders bevorzugt sind in jedem Strang des Fahrzeugenergiespeichers zwischen 80 und 110, ganz besonders bevorzugt 96 einzelne Energiespeicherzellen angeordnet. Jeder Strang bildet dann bevorzugt ein Energiespeichermodul, die zusammen den Fahrzeugenergiespeicher darstellen.

Der erfindungsgemäße Fahrzeugenergiespeicher kann baulich beispielsweise so aufgebaut sein, dass er ein Trägergehäuse mit einzelnen Fächern aufweist, in die jeweils eine der Energiespeicherzellen eingesetzt ist. Das Trägergehäuse kann aus einzelnen Modulgehäusen zusammengesetzt sein, wobei jedes Modulgehäuse das Fach bzw. die Fächer für die Energiespeicherzelle(n) eines der Energiespeichermodule aufweist.

Erfindungsgemäß sind in dem ersten Strang und dem zweiten Strang, ganz allgemein in jedem Strang, mindestens ein Halbleiterschalterelement angeordnet, die angesteuert werden können, um den Stromfluss in dem jeweiligen Strang zu unterbrechen. Bei dem Halbleiterschalterelement kann es sich bevorzugt um einen oder eine Vielzahl von Feldeffekttransistoren oder Bipolartransistoren handeln. Insbesondere kommen im Rahmen der Erfindung Feldeffekttransistoren, wie MOSFET, oder Bipolartransistoren, wie IGBT, in Betracht.

Dadurch, dass sowohl in dem ersten Strang als auch dem zweiten Strang jeweils ein Halbleiterschalterelement angeordnet ist, bleiben sehr hohe Ströme, die durch den jeweiligen Strang fließen beherrschbar. Auf Sicherungen, pyrotechnische Schalter oder Schütze kann vorzugsweise vollständig verzichtet werden.

Auch lässt sich durch die erfindungsgemäße Verwendung von Halbleiterschalterelementen in jedem der Stränge die strangweise Unterbrechung so schnell durchführen, dass Kurzschlussströme bei weitem nicht mehr ihre maximalen Werte annehmen bzw. sehr stark begrenzt werden können. Dies führt dazu, dass Kabelbäume und Stecker im Hinblick auf ihre Stromfestigkeit kleiner dimensioniert werden können (sie müssen bei weitem nicht mehr die im Stand der Technik auftretenden Kurzschlussströme in der Höhe von 30kA aushalten). Das führt unter anderem zu Gewichtseinsparungen und geringeren Kosten.

Darüber hinaus lässt sich wertvoller Bauraum einsparen, weil Halbleiterschalterelemente in der Regel in ihrer Größe sehr viel kleiner sind als beispielsweise ein Schaltschütz, Sicherungen oder Relais.

Die Halbleiterschalterelemente sind so ausgestaltet, dass sie zumindest den in Entladerichtung fließenden Strom des Fahrzeugenergiespeichers unterbrechen können.

*Der erfindungsgemäße Fahrzeugenergiespeicher beinhaltet weiterhin ein Strommesselement, das in dem ersten Strang angeordnet ist, und ein weiteres Strommesselement, das in dem zweiten Strang angeordnet ist.*

Die Strommesselemente, d.h. das in dem ersten Strang angeordnete Strommesselement und das in dem zweiten Strang angeordnete Strommesselement, sind bevorzugt Messwiderstände, beispielsweise Shunt-Widerstände, über die der jeweilige in dem entsprechenden Strang fließende Strom messbar ist. Alternativ kann das Strommesselement auch ein Hall-Effekt-Sensor sein, der in Abhängigkeit von dem in dem entsprechenden Strang fließenden Strom eine entsprechende Hallspannung ausgibt.

Die Strommessvorrichtung kann in ihrer Anzahl und Zuordnung zu den Strängen unterschiedlich ausgebildet sein. Die Strommessvorrichtung(en), wie sie beispielsweise im Folgenden erläutert wird bzw. werden, können zusammen mit den Halbleiterschalterelementen, den Strommesselementen und den Energiespeicherzellen in das Trägergehäuse oder das Modulgehäuse integriert sein (verteilte Kurzschlussunterbrechung). Hierdurch lässt sich weitergehend wertvoller Bauraum einsparen.

Alternativ können/kann die Strommessvorrichtung(en) Teil eines Steuergerätes sein, das neben der Strommessung noch andere Funktionen übernimmt.

Durch die erfindungsgemäße Anordnung des Strommesselements in jedem der Stränge wird es ermöglicht, den jeweiligen durch den entsprechenden Strang fließenden Strom zu messen, weshalb man hierdurch Kenntnis darüber erlangt, ob die Strombelastung auf den ersten und zweiten Strang, ganz allgemein auf die Vielzahl der Stränge, symmetrisch oder asymmetrisch verteilt ist. Allgemein ausgedrückt gibt es keine unbekannten Ausgleichsströme. Aus diesem Grund ist es nicht mehr notwendig, den im Stand der Technik verwendeten Sicherheitsfaktor zu berücksichtigen, weshalb man in dem bestimmungsgemäßen Betrieb des erfindungsgemäßen Fahrzeugenergiespeichers an die Leistungsgrenze des Fahrzeugenergiespeichers gehen kann, ohne dass das Risiko besteht, den ersten oder zweiten Strang ungewollt zu überlasten. Insgesamt sind Leistungssteigerungen von den genannten 10% möglich.

Der erfindungsgemäße Fahrzeugenergiespeicher beinhaltet weiterhin eine dem ersten Strang zugeordnete Strommessvorrichtung, die mit dem in dem ersten Strang angeordneten Strommesselement zur Messung des in dem ersten Strang fließenden Stromes verbunden ist; und eine dem zweiten Stang zugeordnete Strommessvorrichtung, die mit dem in dem zweiten Strang angeordneten Strommesselement zur Messung des in dem zweiten Strang fließenden Stromes verbunden ist.

*Die dem ersten Strang zugeordnete Strommessvorrichtung ist eingerichtet, den in dem ersten Strang fließenden Strom zu messen und das in dem ersten Strang angeordnete Halbleiterschalterelement zur Unterbrechung des fließenden Stromes anzusteuern, wenn der in dem ersten Strang fließende Strom einen Schwellenwert übersteigt.*

*Gleichermaßen ist die dem zweiten Strang zugeordnete Strommessvorrichtung eingerichtet, den in dem zweiten Strang fließenden Strom zu messen und das in dem zweiten Strang angeordnete Halbleiterschalterelement zur Unterbrechung des fließenden Stromes anzusteuern, wenn der in dem zweiten Strang fließende Strom einen Schwellenwert übersteigt.*

Das in dem ersten Strang und in dem zweiten Strang angeordnete Halbleiterschalterelement wird durch die entsprechende zugeordnete Strommessvorrichtung zur Unterbrechung des fließenden Stromes angesteuert, wenn ein Kurzschluss zwischen dem Anschluss positiven Potentials und dem Anschluss negativen Potentials auftritt und der resultierende in Entladerichtung fließende Kurzschlussstrom den entsprechenden Schwellenwert übersteigt.

Der Schwellenwert, mit dem der in dem ersten Strang fließende Strom verglichen wird, und der Schwellenwert, mit dem der in dem zweiten Strang fließende Strom verglichen wird, können identisch oder unterschiedlich sein.

Gleiches gilt für die dem ersten Strang zugeordnete Strommessvorrichtung und die dem zweiten Strang zugeordnete Strommessvorrichtung. D.h. die Strommessvorrichtungen können identisch oder unterschiedlich ausgestaltet sein.

*Besonders ist der erfindungsgemäße Fahrzeugenergiespeicher wie im Vorhergehenden erläutert ausgestaltet, wobei die dem ersten Strang und dem zweiten Strang zugeordnete Strommessvorrichtung jeweils einen eine Komparatorschaltung bildenden Operationsverstärker beinhaltet, der den über das jeweilige Strommesselement gemessenen Strom mit dem Schwellenwert vergleicht und dessen Ausgangssignal das Halbleiterschalterelement zur Unterbrechung des fließenden Stromes ansteuert, wenn der fließende Strom den Schwellenwert übersteigt.*

Die Komparatorschaltung ist der Operationsverstärker, an dem, beispielsweise an seinem nicht-invertierenden Eingang, die über das Strommesselement abfallende Spannung (oder die Hallspannung) anliegt und der die anliegende Spannung mit einer, beispielsweise an dem invertierenden Eingang anliegenden, Referenzspannung (Schwellenwert) vergleicht. Das Ausgangssignal des Operationsverstärkers steuert das entsprechende Halbleiterschalterelement an. Hierfür ist beispielsweise der Ausgang des Operationsverstärkers mit einer mindestens bistabilen Treiberschaltung (beispielsweise enthält die Treiberschaltung wenigstens ein Flipflop) verbunden, die wiederum mit dem Gateanschluss eines das Halbleiterschalterelement bildenden Transistors verbunden ist.

*Weiterhin bevorzugt ist der erfindungsgemäße Fahrzeugenergiespeicher wie im Vorhergehenden erläutert ausgestaltet, wobei in dem ersten und*/*oder zweiten Strang jeweils eine Vielzahl von Halbleiterschalterelementen angeordnet ist, und die Vielzahl von Halbleiterschalterelementen eine Gruppe parallel geschalteter Halbleiterschalterelemente beinhaltet, die gemeinsam zur Unterbrechung des in dem jeweiligen Strang fließenden Stromes durch die jeweilige Strommessvorrichtung angesteuert werden, wenn der in dem jeweiligen Strang fließende Strom den Schwellenwert übersteigt.*

Durch das Vorsehen einer Vielzahl von Halbleiterschalterelementen wird bevorzugt erreicht, dass die Strombelastung der einzelnen Halbleiterschalterelemente verringert wird.

*Der erfindungsgemäße Fahrzeugenergiespeicher weist weiterhin auf:*
*eine Schaltanordnung, die in Reihe zu den zueinander parallel angeordneten Strängen angeordnet ist und mindestens ein weiteres Halbleiterschalterelement aufweist, wobei die Schaltanordnung eingerichtet ist, in Abhängigkeit von einem Steuersignal das weitere Halbleiterschalterelement zur Unterbrechung eines gesamten durch den Fahrzeugenergiespeicher fließenden Stromes anzusteuern.*

Das weitere Halbleiterschalterelement der Schaltanordnung ist bevorzugt so ausgerichtet, dass es insbesondere einen in den erfindungsgemäßen Fahrzeugenergiespeicher fließenden Strom unterbrechen kann. Mit anderen Worten kann das weitere Halbleiterschalterelement den Ladestrom unterbrechen. Durch diese Ausgestaltung des erfindungsgemäßen Fahrzeugenergiespeichers könnten die in dem ersten Strang angeordnete Gruppe und die in dem zweiten Strang angeordnete Gruppe, die jeweils zur Unterbrechung des Ladestroms vorgesehen sind, durch das weitere Halbleiterschalterelement ersetzt werden. Bevorzugt kann die Schaltanordnung auch eine Vielzahl von parallel geschalteten Halbleiterschalterelementen aufweisen, um die Strombelastung zu reduzieren. Die Ansteuerung des weiteren Halbleiterschalterelementes bzw. der weiteren Halbleiterschalterelemente wird im Folgenden erläutert.

Die Ausgestaltungen des erfindungsgemäßen Fahrzeugenergiespeichers, die es ermöglichen, den Ladestrom und den Entladestrom zu unterbrechen, erlauben es gleichzeitig, einen gesetzlich vorgeschriebenen Schalter, über den der Fahrzeugenergiespeicher von dem Antriebsaggregat galvanisch getrennt werden kann, im Hinblick auf die Stromfestigkeit kleiner zu dimensionieren, weil durch die Verwendung der erläuterten Halbleiterschalterelemente die Kurzschlussströme so schnell geschaltet werden können, dass der Schalter nicht mehr hohe Anforderungen erfüllen muss.

*Schließlich betrifft die Erfindung ein Kraftfahrzeug aufweisend einen Fahrzeugenergiespeicher, wie er im Vorhergehenden erläutert wurde.*

Wie aus der vorherigen Beschreibung verständlich wird, können durch den Einsatz der Halbleiterschalterelemente Kurzschlussströme in beiden Richtungen (Ladestrom und Entladestrom) beherrscht werden. Insbesondere können durch die Halbleiterschalterelemente die entsprechenden Ströme so schnell unterbrochen werden, dass die Kurzschlussströme nicht mehr die eingangs genannten Werte von 30kA annehmen. Dies gilt insbesondere für den Fall, dass der erfindungsgemäße Fahrzeugenergiespeicher mindestens vier identisch ausgebildete Stränge aufweist, in denen jeweils eine Vielzahl von Energiespeicherzellen (beispielsweise 96 Energiespeicherzellen) angeordnet sind. Die durch die Kurzschlussströme belasteten Elemente können folglich im Hinblick auf die Stromfestigkeit kleiner dimensioniert werden.

In der Regel legen Hersteller von Fahrzeugenergiespeichern Gewährleistungsgrenzen fest, die besagen, dass der durch den Fahrzeugenergiespeicher fließende Strom für eine bestimmte Zeitdauer nur einen maximalen Wert annehmen darf. Dadurch, dass durch die vorliegende Erfindung die Unterbrechung des Stromflusses im Kurzschlussfall so schnell erfolgen kann, dass der Kurzschlussstrom keine extremen Werte annimmt, können die genannten Gewährleistungsgrenzen auch im Kurzschlussfall gut eingehalten werden. Gewährleistungskosten werden dadurch massiv reduziert; außerdem kann ein Werkstattaufenthalt unter Umständen vermieden werden (kein Liegenbleiber).

Im Folgenden werden bevorzugte Ausführungsformen der Erfindung unter Bezug auf die beigefügten Figuren erläutert.

**Figur 1A** zeigt ein Fahrzeugenergiespeichersystem gemäß eines Ausführungsbeispiels, das einen Fahrzeugenergiespeicher, eine Schaltanordnung zur galvanischen Trennung des Fahrzeugenergiespeichers von einem Motor, und eine Fahrzeugspeichersteuerungseinrichtung aufweist;

**Figur 1B** zeigt eine detailliertere Darstellung einer Strommessvorrichtung des in Figur 1A gezeigten Fahrzeugenergiespeichersystems;

**Figur 2** zeigt ein erfindungsgemäßes Fahrzeugenergiespeichersystem gemäß der bevorzugten Ausführungsform, die sich von der ersten Ausführungsform in der Ausbildung der Schaltanordnung unterscheidet.

**Figur 3** zeigt die Signalverläufe einer Simulation, die qualitativ zeigt, dass durch den erfindungsgemäßen Einsatz von mindestens einem Halbleiterschalterelement in jedem Strang des Fahrzeugenergiespeichers die Kurzschlussströme beherrschbar bleiben.

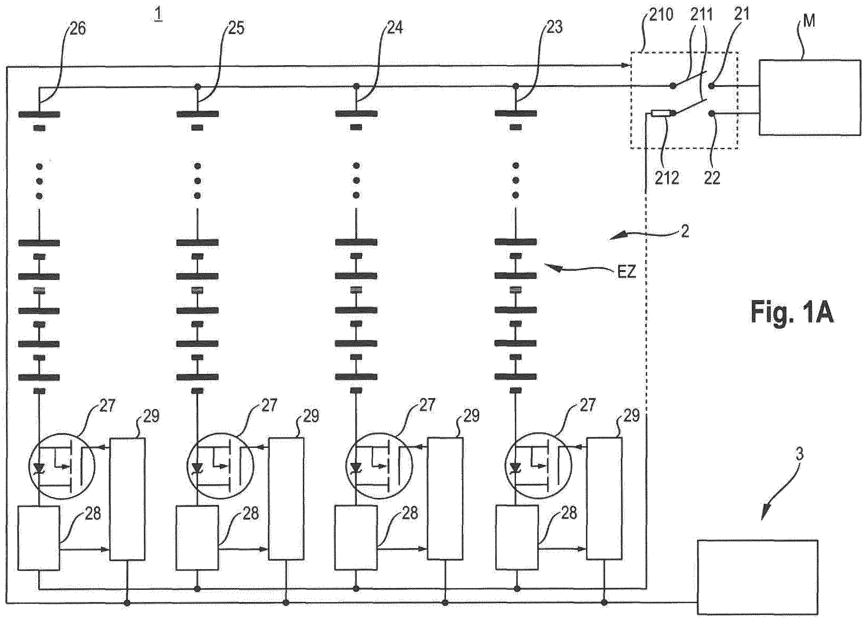

Erstes Ausführungsbeispiel um die Erfindung zu verstehen Die Figur 1A zeigt ein Ausführungsbeispiel eines Fahrzeugenergiespeichersystems 1, das einen Fahrzeugenergiespeicher 2 und eine Fahrzeugspeichersteuerungseinrichtung 3 aufweist.

Der Fahrzeugenergiespeicher 2 beinhaltet einen Anschluss positiven Potentials 21 und einen Anschluss negativen Potentials 22, über die der Fahrzeugenergiespeicher 2 mit einem Abnehmer verbunden ist. Der Abnehmer ist in dieser bevorzugten Ausführungsform ein elektrisches Antriebsaggregat M eines Kraftfahrzeuges und wird mit in dem Fahrzeugenergiespeicher 2 gespeicherter elektrischen Energie für den Antrieb des Kraftfahrzeuges versorgt.

Der Fahrzeugenergiespeicher 2 beinhaltet einen ersten Strang 23, der den Anschluss positiven Potentials 21 mit dem Anschluss negativen Potentials 22 elektrisch verbindet. In dem ersten Strang 23 ist eine Vielzahl von elektrischen Energiespeicherzellen EZ angeordnet, wobei die einzelnen Energiespeicherzellen EZ miteinander in Reihe geschaltet sind.

In Reihe zu den Energiespeicherzellen EZ ist in dem ersten Strang 23 ein Halbleiterschalterelement 27 und ein Strommesselement 28 angeordnet.

Der Fahrzeugenergiespeicher 2 beinhaltet neben dem ersten Strang 23 einen zweiten Strang 24, einen dritten Strang 25 und einen vierten Strang 26. Der zweite Strang 24, der dritte Strang 25 und der vierte Strang 26 sind jeweils parallel zu dem ersten Strang 23 angeordnet und verbinden den Anschluss positiven Potentials 21 mit dem Anschluss negativen Potentials 22. Der zweite, dritte und vierte Strang 24-26 ist jeweils identisch zu dem ersten Strang 23 aufgebaut und beinhaltet die gleichen Elemente. Insoweit gelten folgende Ausführungen für alle Stränge 23 - 26 gleichermaßen.

Bei den Energiespeicherzellen EZ handelt es sich bevorzugt um Lithium-Akkumulatoren, die jeweils ein Gehäuse aufweisen, in dem eine entsprechende Elektrolytlösung mit den weiteren Elementen aufgenommen ist und auf dem die entsprechenden Zellenanschlüsse (Anode bzw. Kathode) angeordnet sind. Die Energiespeicherzellen EZ sind bevorzugt in Fächer eines Trägergehäuses (nicht gezeigt) eingesetzt.

Das in dem ersten Strang 23 angeordnete Halbleiterschalterelement 27 kann derart angesteuert werden, dass es den in dem ersten Strang 23 fließenden Strom unterbricht. Diese Unterbrechung erfolgt bevorzugt dann, wenn in dem elektrischen Antriebsaggregat M ein Kurzschluss auftritt, indem der Anschluss positiven Potentials 21 mit dem Anschluss negativen Potentials 22 verbunden wird und der hierdurch auftretende Kurzschlussstrom in dem ersten Strang 23 einem bestimmten Schwellenwert übersteigt. Hierfür beinhaltet der erste Strang 23 eine ihm zugeordnete Strommessvorrichtung 29, die zum einen mit dem Halbleiterschalterelement 27 und zum anderen mit dem in dem ersten Strang 23 angeordneten Strommesselement 28 verbunden ist.

Die weiteren Stränge 24-26 sind identisch aufgebaut, das heißt sie beinhalten ebenfalls jeweils ein Halbleiterschalterelement 27, ein Strommesselement 28, und eine dem entsprechenden Strang zugeordnete Strommessvorrichtung 29, wobei die jeweiligen Strommessvorrichtungen 29 eingerichtet sind, den in dem entsprechenden Strang fließenden Strom zu messen und das entsprechende Halbleiterschalterelement 27 zur Unterbrechung des in dem Strang fließenden Stromes anzusteuern.

Das in jedem der Stränge angeordnete Halbleiterschalterelement 27 ist in dieser Ausführungsform als ein Feldeffekttransistor ausgebildet, wobei ein Gateanschluss des jeweiligen Feldeffekttransistors mit der Strommessvorrichtung 29 verbunden ist.

Bevorzugt können allerdings in jedem der Stränge 23-26 eine Vielzahl von Halbleiterschalterelementen 27, d.h. Transistoren, angeordnet sein, wobei in diesem Fall in jedem der Stränge die Halbleiterschalterelemente 27 parallel zueinander angeordnet sind und gemeinsam durch die jeweilige Strommessvorrichtung 29 angesteuert werden können.

Bevorzugt beinhaltet der Fahrzeugenergiespeicher 2 noch eine Schaltanordnung 210, die einen Schaltschütz 211 und eine Sicherung 212 aufweist.

Neben dem Fahrzeugenergiespeicher 2 beinhaltet das Fahrzeugenergiespeichersystem 1 noch eine Fahrzeugspeichersteuerungseinrichtung 3, die zum einen mit den Strommessvorrichtungen 29 und zum anderen mit der Schaltanordnung 210 verbunden ist. Bei der Fahrzeugspeichersteuerungseinrichtung 3 kann es sich um ein gesondertes Batteriemanagementsystem oder um ein Steuergerät, das neben dem Batteriemanagement noch andere Funktionen erfüllt, handeln.

Die Fahrzeugspeichersteuerungseinrichtung 3 kann das Schaltschütz 211 bevorzugt derart ansteuern, dass es die Verbindung zu dem Anschluss positiven Potentials 21 und dem Anschluss negativen Potentials 22 unterbricht.

Das Fahrzeugenergiespeichersystem 1 ist dazu eingerichtet, den gesamten Stromfluss durch den Fahrzeugenergiespeicher 2 zu unterbrechen, wenn ein Kurzschluss auftritt. Ein solcher Kurzschluss kann zum einen beim Entladen des Fahrzeugenergiespeichers 2, d.h. bei dem bestimmungsgemäßen Betrieb des Antriebsaggregats M, und zum anderen bei einem Laden des Fahrzeugenergiespeichers 2, d.h. wenn eine externe Energieversorgung an den Anschluss positiven Potentials 21 und den Anschluss negativen Potentials 22 angeschlossen ist, auftreten.

### (Kurzschluss bei Entladen des Fahrzeugenergiespeichers 2)

In dem bestimmungsgemäßen Betrieb des Fahrzeugenergiespeichersystems 1 schließt die Fahrzeugspeichersteuerungseinrichtung 3 das Schaltschütz 211, wodurch das Antriebsaggregat M durch die Energie, die in dem Fahrzeugenergiespeicher 2 gespeichert ist, für den Antrieb des Kraftfahrzeuges versorgt wird.

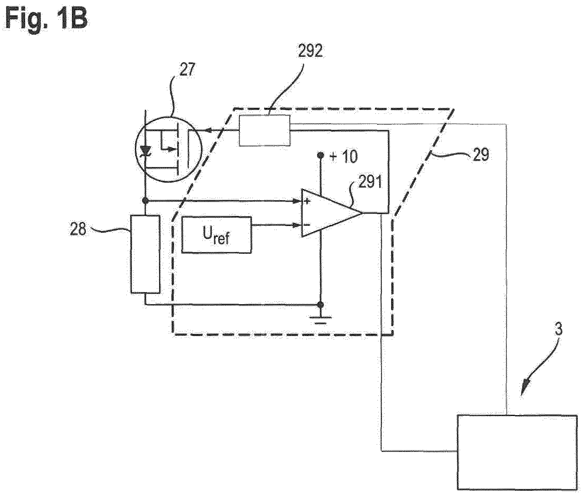

Wenn in diesem Zustand beispielsweise in dem Antriebsaggregat M ein Kurzschluss auftritt, entsteht ein Kurzschlussstrom, der durch den gesamten Fahrzeugenergiespeicher 2 fließt und unterbrochen werden muss. Dies erfolgt dadurch, dass in jedem der Stränge 23-26 der entsprechende Stromfluss durch das Halbleiterschalterelement 27 unterbrochen wird, wenn der in dem jeweiligen Strang fließende Strom einen bestimmten Schwellenwert überschreitet. Dies wird unter Bezug auf Fig. 1B erläutert werden.

Wie aus Figur 1B ersichtlich ist, beinhaltet die Strommessvorrichtung 29 jedes Stranges einen Operationsverstärker 291, der die Funktion eines Komparators übernimmt. Einer der Anschlüsse für die Betriebsspannung des Operationsverstärkers 291 liegt auf einem positiven Potential (beispielsweise 10V) und der andere der Anschlüsse liegt auf einem Massepotenzial, sodass der Ausgang des Operationsverstärkers 291 zwischen dem positiven Potential und dem Massepotenzial umschalten kann.

Der Ausgang des Operationsverstärkers 291 ist mit einem Treiber 292 verbunden, der zumindest zwei stabile Zustände einnehmen kann. Hierfür enthält der Treiber 292 beispielsweise ein Filpflop. Zusätzlich kann der Treiber 292 noch Elemente enthalten, um die Gate-Source-Spannung des entsprechenden Transistors einzustellen. Zu diesen Elementen können Optokoppler gehören.

Die Strommessvorrichtung 29 ist zur Messung des jeweiligen in dem entsprechenden Strang fließenden Stromes mit dem Strommesselement 28 elektrisch verbunden. Das Strommesselement 28 ist bevorzugt ein Messwiderstand (beispielsweise ein Shunt) oder ein Hall-Effekt-Sensor, der in Abhängigkeit von der Stärke des in dem Strang fließenden Stromes eine bestimmte Hallspannung ausgibt.

Genauer gesagt ist der nicht-invertierende Eingang des Operationsverstärkers 291 mit dem Messwiderstand oder dem Hall-Effekt-Sensor so verbunden, dass die über den Messwiderstand abfallende Spannung oder die Hallspannung als Eingangssignal der Strommessvorrichtung 29 dient.

An dem invertierenden Eingang des Operationsverstärkers 291 liegt eine Referenzspannung Uref an, mit der die über den Messwiderstand abfallende Spannung oder die Hallspannung (allgemein das Eingangssignal) verglichen wird. Insoweit bildet die Referenzspannung Uref den Schwellenwert für den Vergleich.

Befindet sich der Fahrzeugenergiespeicher 2 in einem normalen Funktionsbetrieb, in dem bestimmungsgemäße Ströme in den jeweiligen Strängen fließen, dann liegt der Wert der über den Messwiderstand abfallenden Spannung oder die Hallspannung unterhalb der Referenzspannung Uref. Dies führt dazu, dass der Operationsverstärker 291 an seinem Ausgang das positive Potential ausgibt und der Treiber 292 sich in einem Zustand befindet bzw. verbleibt, in dem das Halbleiterschalterelement 27 bzw. der Transistor in seinen leitenden Zustand versetzt ist. In diesem leitenden Zustand kann der Transistor - idealerweise - als geschlossener Schalter betrachtet werden.

Tritt nunmehr in dem Antriebsaggregat M ein Kurzschluss auf, steigt in jedem der Stränge der entsprechende Stromfluss unmittelbar an. Aus diesem Grund steigt gleichermaßen die Spannung des Strommesselements 28 an, die ab einem bestimmten Wert des durch den jeweiligen Strang fließenden Stromes die Referenzspannung Uref bzw. den Schwellenwert übersteigt.

Hierdurch kippt der Ausgang des Operationsverstärkers 291 auf das Massepotenzial und steuert hierdurch den Treiber 292 an, der hierdurch in einen Zustand kippt, in dem das Halbleiterschalterelement 27 bzw. der Transistor den in dem entsprechenden Strang fließenden Strom unterbricht. Mit anderen Worten wird der Transistor in seinen nicht-leitenden Zustand versetzt. Die erläuterte Unterbrechung erfolgt in jedem der Stränge 23 - 26 individuell, sodass die Stränge in Abhängigkeit von dem fließenden Strom in einer entsprechenden Reihenfolge unterbrochen werden.

Die Ansteuerung des Halbleiterschalterelementes 27 erfolgt durch die Strommessvorrichtung 29 derart schnell, dass der im Kurzschlussfall durch den entsprechenden Strang fließende Strom sehr weit unter seinem maximalen Wert, der beispielsweise bei ca. 30kA liegt, bleibt. Hierdurch wird erreicht, dass Kabelstränge und Stecker im Hinblick auf die Stromfestigkeit kleiner dimensioniert werden können.

Wie aus Fig. 1B hervorgeht, ist die Fahrzeugspeichersteuerungseinrichtung 3 mit jeder der Strommessvorrichtungen 29 an dem Ausgang des entsprechenden Operationsverstärkers 291 verbunden und erkennt das Schalten der Operationsverstärker 291. Darüber hinaus ist die Fahrzeugspeichersteuerungseinrichtung 3 auch mit dem entsprechenden Treiber 292 der Strommessvorrichtung 29 verbunden. Wenn die Fahrzeugspeichersteuerungseinrichtung 3 so ausgestaltet ist, dass sie das Schalten des Operationsverstärkers 291 entsprechend schnell detektiert, könnte alternativ die Ansteuerung des Treibers 291 auch durch die Fahrzeugspeichersteuerungseinrichtung 3 erfolgen.

Die Ansteuerung des Halbleiterschalterelementes 27 führt auch dazu, dass die Fahrzeugspeichersteuerungseinrichtung 3 den Fahrzeugenergiespeicher von dem Antriebsaggregat galvanisch trennt, indem sie das Schaltschütz 211 entsprechend ansteuert.

Wenn die Ursache für den Kurzschluss behoben ist und die Fahrzeugspeichersteuerungseinrichtung 3 diese Information erhält, steuert sie die Treiber 292 entsprechend an, wodurch diese in den Zustand zurückgesetzt werden, in dem sie das Halbleiterschalterelement 27 in seinen leitenden Zustand versetzen. Darüber hinaus schließt die Fahrzeugspeichersteuerungseinrichtung 3 wieder das Schaltschütz 211.

### (Kurzschluss bei Laden des Fahrzeugenergiespeichers 2)

Wenn der Fahrzeugenergiespeicher 2 nach dem Betrieb des Antriebsaggregats M geladen werden muss, wird hierfür eine externe Energieversorgung an den Anschluss positiven Potentials 21 und an den Anschluss negativen Potentials 22 angeschlossen.

Kommt es in diesem Zustand zu einem Kurzschluss, indem die Energiespeicherzellen eines der Stränge Ziffer 23 - 26 durchbrennen, tritt zumindest in dem den Kurzschluss verursachenden Strang der entsprechende Kurzschlussstrom auf. Dieser Kurzschlussstrom hat verglichen mit dem Fall, dass der Kurzschluss bei dem im Vorhergehenden erläuterten Entladen auftritt, ein umgekehrtes Vorzeichen, d.h. dass der Kurzschlussstrom in entgegengesetzter Richtung fließt.

Die jeweilige dem entsprechenden Strang zugeordnete Strommessvorrichtung 29 kann zwar den bei Laden des Fahrzeugenergiespeichers 2 auftretenden Kurzschlussstrom ebenfalls erkennen, nur führt das Schalten des Halbleiterschalterelementes 27 bzw. des Transistors nicht zu einer Unterbrechung des Stromflusses. Dies begründet sich darin, dass Feldeffekttransistoren eine intrinsische Diode besitzen, die ein Unterbrechen des Stromflusses in der notwendigen Richtung unmöglich macht. Um trotzdem den bei Laden auftretenden Kurzschlussfall zu erkennen und den gesamten Stromfluss durch den Fahrzeugenergiespeicher 2 zu unterbrechen, ist die Fahrzeugspeichersteuerungseinrichtung 3 mit den Strommessvorrichtungen 29 verbunden und erkennt hierdurch das Schalten der betroffenen Operationsverstärker 291.

Wenn die Fahrzeugspeichersteuerungseinrichtung über die Strommessvorrichtungen 29 den Kurzschlussfall erkennt, steuert sie das Schaltschütz 211 entsprechend an, um den Fahrzeugenergiespeicher 2 von dem Antriebsaggregat M galvanisch zu trennen. Sollte sich das Schaltschütz 211 nicht öffnen lassen, besitzt die Schaltanordnung 210 hierfür noch zusätzlich eine Schmelzsicherung 212.

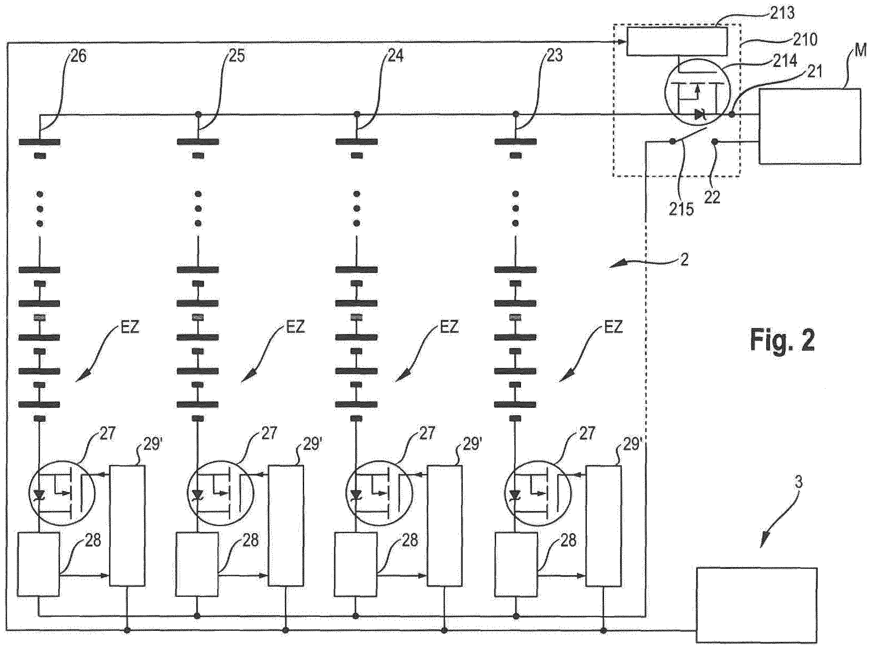

Erste Ausführungsform Figur 2 zeigt ein Fahrzeugenergiespeichersystem 1' gemäß der Ausführungsform der Erfindung.

Das gezeigte Fahrzeugenergiespeichersystem 1' unterscheidet sich von dem der ersten bevorzugten Ausführungsform in der Ausgestaltung der Schaltanordnung 210 und der Strommessvorrichtungen 29'. Die verbleibenden Elemente sind mit denen der ersten bevorzugten Ausführungsform identisch und tragen deshalb dieselben Bezugszeichen. Diesbezüglich wird auf die Ausführungen zu der ersten bevorzugten Ausführungsform verwiesen.

Die Schaltanordnung 210 der Ausführungsform des erfindungsgemäßen Fahrzeugenergiespeichersystems 1'hat keinen Schaltschütz und keine Sicherung, sondern beinhaltet eine Halbleitersteuerung 213, die mit jeder der Strommessvorrichtungen 29' und der Fahrzeugspeichersteuerungseinrichtung 3 verbunden ist, ein durch die Halbleitersteuerung 213 ansteuerbares weiteres Halbleiterschalterelement 214 und einen gewöhnlichen mechanischen Schalter 215 zur galvanischen Trennung des elektrischen Antriebsaggregats M von dem Fahrzeugenergiespeicher 2. Der gewöhnliche mechanische Schalter ist entbehrlich und kann weggelassen werden, sodass der erfindungsgemäße Fahrzeugenergiespeicher 2 keine mechanischen Schalter mehr besitzt.

Der Fahrzeugenergiespeicher 2 der zweiten bevorzugten Ausführungsform der Erfindung ist mit dem des ersten Ausführungsbeispiels identisch, d.h. er beinhaltet die Vielzahl von Strängen 23 bis 26, in denen jeweils mindestens ein Halbleiterschalterelement 27 zur Unterbrechung des entsprechenden Stromflusses angeordnet ist.

Die Funktionsweise des Fahrzeugenergiespeichers 2 im Falle eines Kurzschlusses bei bestimmungsgemäßer Entladung ist mit der Funktionsweise des Fahrzeugenergiespeichers 2 aus Figur 1A identisch, weshalb auf die dortigen Ausführungen verwiesen wird.

Allerdings unterscheidet sich die Funktionsweise des Fahrzeugenergiespeichersystems 1' im Falle eines Kurzschlusses/Überstromes bei dem bestimmungsgemäßen Laden des Fahrzeugenergiespeichers 2.

### (Kurzschluss/Überstrom bei Laden des Fahrzeugenergiespeichers 2)

Während eines Ladevorganges des Fahrzeugenergiespeichers 2 ist eine externe Energieversorgung an den Anschluss positiven Potentials 21 und an den Anschluss negativen Potentials 22 angeschlossen. Der Schalter 215 ist geschlossen.

Wenn in diesem Zustand ein Kurzschluss oder Überstrom auftritt, der beispielsweise dadurch ausgelöst wird, dass die Energiespeicherzellen EZ eines der Stränge 23 - 26 durchbrennen oder die externe Energieversorgung einen zu hohen Strom einleitet, steigt der in dem entsprechenden Strang fließende Strom (Kurzschlussstrom oder Überstrom) unmittelbar an.

Wie auch im ersten Ausführungsbeispiel sind die Feldeffekttransistoren 27 nicht dazu in der Lage, den Kurzschlussstrom/Überstrom zu unterbrechen, obwohl die mit dem entsprechenden Feldeffekttransistor verbundene Strommessvorrichtung 29 über das Strommesselement 28 den Kurzschlussstrom feststellt und den entsprechenden Feldeffekttransistoren ansteuert. Dies liegt wiederum an der intrinsischen Diode der Feldeffekttransistoren.

Um dennoch den bei Laden des Fahrzeugenergiespeichers 2 auftretenden Kurzschluss zu beherrschen, beinhaltet jede der Strommessvorrichtungen 29' gegenüber der Konfiguration der ersten bevorzugten Ausführungsform einen weiteren Operationsverstärker der an seinen Eingängen so verschaltet ist, dass sein entsprechender Ausgang bei Auftreten des Kurzschlussstroms/Überstroms kippt. Die Ausgänge der weiteren Operationsverstärker sind mit der Halbleitersteuerung 213 verbunden, wobei diese - wie die Strommessvorrichtungen 29 der ersten bevorzugten Ausführungsform - einen Treiber beinhaltet, der bei Kippen eines der Ausgänge der weiteren Operationsverstärker in einen solchen Zustand versetzt wird, dass das weitere Halbleiterschalterelement 214 in seinen nicht leitenden Zustand geschaltet wird. Alternativ könnte das Ansteuern des Treibers der Schaltanordnung auch durch die Fahrzeugspeichersteuerungseinrichtung 3 erfolgen, wenn diese das Kippen der Ausgänge der weiteren Operationsverstärker ausreichend schnell detektieren kann.

Ähnlich wie bei den Halbleiterschalterelementen 27 können auch in der Schaltanordnung 210 eine Vielzahl von zueinander parallel geschalteten weiteren Halbleiterschalterelementen 214 vorgesehen sein.

Die durchgeführte Ansteuerung des weiteren Halbleiterschalterelementes 214 kann so schnell erfolgen, dass der Kurzschlussstrom weit unter seinem maximalen Wert oder der Überstrom unter einem maximal zulässigen Wert bleibt. Die Geschwindigkeit der Ansteuerung liegt in derselben Größenordnung wie die Ansteuerung der Halbleiterschalterelemente 27.

In der Ausführungsform ist es möglich, den gesamten durch den Fahrzeugenergiespeicher 2 fließenden Strom durch Halbleiterschalterelemente 27 oder 214 zu unterbrechen, wenn entweder bei dem bestimmungsgemäßen Entladen ein Kurzschluss oder bei dem bestimmungsgemäßen Laden ein Kurzschluss/Überstrom auftritt; allgemein gesagt werden beide Fälle durch das Ansteuern von Halbleiterschalterelementen abgedeckt.

Die Ausführungsform ermöglicht es deshalb, auch den in der Schaltanordnung 210 verbauten Schalter 215 in Bezug auf die Stromfestigkeit kleiner dimensionieren zu können. Wie bereits erwähnt kann dieser Schalter 215 auch ganz entfallen.

Modifizierte Beispiele um die Erfindung zu verstehen Allgemein gesagt gelten die Ausführungen und Erläuterungen, die im allgemeinen Teil vor der Figurenbeschreibung gemacht wurden, auch für die erläuterte Ausführungsform und für die Beispiele.

Dort wird der durch den Fahrzeugenergiespeicher 2 fließende Strom durch die Schaltanordnung 210 unterbrochen, wenn der Kurzschluss während eines bestimmungsgemäßen Ladevorgangs auftritt.

Alternativ hierzu kann in jedem der Stränge 23 - 26 ein weiteres Halbleiterschalterelement, d.h. ein weiterer Feldeffekttransistor, angeordnet werden, der allerdings so angeordnet ist, dass die intrinsische Diode zu der gezeigten umgekehrt gepolt ist und der entsprechende Feldeffekttransistor den Kurzschlussstrom/Überstrom während eines bestimmungsgemäßen Ladevorgangs unterbrechen kann. Wie auch bei den in Figuren 1A und 2 gezeigten Halbleiterschalterelementen 27 kann auch eine Vielzahl weiterer Halbleiterschalterelemente, die zueinander parallel geschaltet sind, eingesetzt werden. Der oder die Halbleiterschalterelemente sind dann ebenfalls über ihren Gateanschluss mit der jeweiligen Strommessvorrichtung 29 verbunden, die bei Auftreten eines Kurzschlusses/Überstromes alle Halbleiterschalterelemente, d.h. Feldeffekttransistoren gemeinsam ansteuert.

Die Transistoren der bevorzugten Ausführungsformen sind nicht auf Feldeffekttransistoren beschränkt. Es können auch andersartige Transistoren, wie beispielsweise IGBTs, oder gänzlich andere Halbleiterschalterelemente, wie beispielsweise Thyristoren, zum Einsatz kommen.

In den bevorzugten Ausführungsformen sind Feldeffekttransistoren vom Anreicherungstyp (n-Kanal) gezeigt. Auch hierauf ist die Erfindung nicht eingeschränkt. Es können beispielsweise auch p-Kanal-Transistoren verwendet werden. Darüber hinaus können auch Transistoren vom Verarmungstyp eingesetzt werden.

Die Festlegung der Schwellwerte bzw. der Referenzspannungen Uref, die in den einzelnen Strängen verwendet werden, können individuell festgelegt werden, beispielsweise in Abhängigkeit davon, wie viele einzelne Energiespeicherzellen EZ in dem entsprechenden Strang angeordnet sind.

In der Ausführungsform und den Beispielen ist jedem Strang eine eigene Strommessvorrichtung 29 zugeordnet. Alternativ ist es denkbar, nur eine einzige Strommessvorrichtung 29 zu verwenden, die mit jedem der Strommesselemente 28 verbunden ist. Wenn in diesem Fall der Stromfluss in einem der Stränge 23 - 26 den in der Strommessvorrichtung 29 festgelegten Schwellenwert übersteigt, steuert die Strommessvorrichtung insgesamt alle Halbleiterschalterelemente 27 gleichzeitig an.

### Simulationsergebnisse

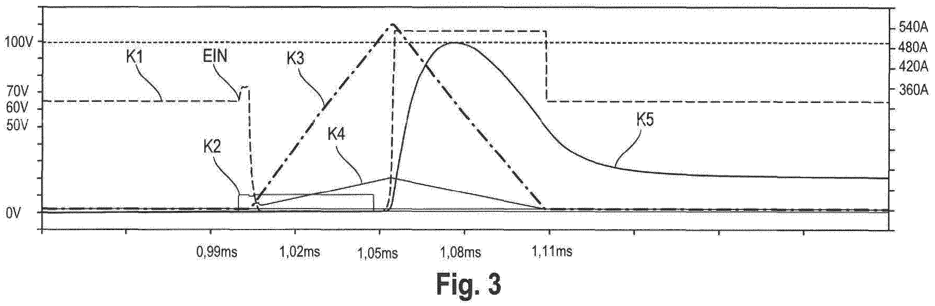

Die Figur 3 zeigt die Signalverläufe einer durch den Erfinder durchgeführten Simulation.

Die Simulation wurde auf Basis eines Fahrzeugenergiespeichers mit einem einzigen Strang durchgeführt und zwar für den Fall, dass der Fahrzeugenergiespeicher sich in seinem bestimmungsgemäßen Entladevorgang befindet und der Kurzschluss mit der entsprechenden Stromrichtung auftritt. Dieser einzige Strang beinhaltete vierzehn einzelne Energiespeicherzellen, die in Reihe geschaltet waren.

Hieraus ergab sich eine Gesamtspannung von 60V und ein nominaler Strom von 200A.

In dem Strang waren sechs parallel geschaltete Feldeffekttransistoren angeordnet, die durch eine entsprechende Strommessvorrichtung angesteuert wurden, die wie in den Ausführungsformen den in dem einzigen Strang fließenden Strom über einen Messwiderstand gemessen hat.

Die gestrichelte Linie K1 zeigt die Spannung U_{DS}, die über den Drain-Source-Kanälen der Feldeffekttransistoren abfällt. Zu dem Zeitpunkt, der dem Punkt EIN entspricht, werden die Feldeffekttransistoren in ihren leitenden Zustand versetzt, indem ein Gate-Ansteuersignal (Linie K2) entsprechend geschaltet wird.

Unmittelbar nach dem Einschalten der Feldeffekttransistoren tritt der genannte Kurzschluss auf, wobei der entsprechende Kurzschlussstrom rapide ansteigt (strichpunktierte Linie K3), der praktisch nur durch die Leitungsinduktivitäten bzw- -widerstände begrenzt wird. Die entsprechenden Werte betrugen in der Simulation ca. 5 µH und 14Ω. Der individuelle Stromfluss durch jeden der Feldeffekttransistoren steigt entsprechend an (Linie K4).

Der Schwellenwert bzw. die Referenzspannung Uref zur Auslösung der Unterbrechung des Stromflusses wurde auf 480A festgelegt.

Die Ansteuerzeit der Feldeffekttransistoren durch die Strommessvorrichtung betrug im schlechtesten Fall ca. 70 µs; in Figur 3 ist ersichtlich, dass das Gate-Ansteuersignal nach dieser Zeitspanne geschaltet wird (siehe abfallende Flanke der Linie K2).

Für diesen Fall betrug der Wert des maximalen Kurzschlussstromes ca. 540A, das heißt ca. 90A pro Feldeffekttransistor, wobei die Spannung U_{DS}, die über den Drain-Source-Kanälen der Feldeffekttransistoren abfällt, hierbei ungefähr auf 110V anstieg. Nach Absinken des Kurzschlussstromes (Linie K3), verbleiben die Feldeffekttransistoren in ihrem ausgeschalteten Zustand, in dem die Spannung U_{DS} denselben Wert wie vor dem Punkt EIN aufweist.

Dieser maximale Kurzschlussstrom führte bei einer angenommenen Umgebungstemperatur von 50 °C zu einer Aufheizung der Feldeffekttransistoren (Mosfet) auf ca. 150 °C (Linie K5 in Figur 3), wobei die verwendeten Feldeffekttransistoren problemlos 175 °C aushalten.

Durch diese Simulation kann rein qualitativ gezeigt werden, dass durch die Verwendung von Halbleiterschalterelementen die Unterbrechung von Kurzschlussströmen so schnell erfolgen kann, dass die auftretenden maximalen Ströme stark vermindert sind und beherrschbar bleiben.

Die in der Figur 3 gezeigten Verläufe betreffen folgende Messgrößen
K1: Spannung U_{DS}, die über den Drain-Source-Kanälen der Feldeffekttransistoren abfällt;
K2: Gate-Ansteuersignal; Spannung U_{GS}, die zwischen den Gate-Source-Anschlüssen der Feldeffekttransistoren abfällt
K3: Kurzschlussstrom
K4: individueller Kurzschlussstrom pro Transistor
K5: Temperatur der Transistoren

## Patentansprüche

1. Fahrzeugenergiespeicher (2) zur elektrischen Versorgung eines elektrischen Antriebsaggregats (M) eines Kraftfahrzeuges, welcher aufweist:
einen Anschluss positiven Potentials (21) und einen Anschluss negativen Potentials (22), die bei bestimmungsgemäßem Betrieb des Fahrzeugenergiespeichers an das Antriebsaggregat (M) angeschlossen sind;
einen ersten Strang (23), der den Anschluss positiven Potentials (21) und den Anschluss negativen Potentials (22) miteinander verbindet und in dem mindestens eine elektrische Energiespeicherzelle (EZ) angeordnet ist; und
einen zweiten Strang (24 - 26), der parallel zu dem ersten Strang (23) den Anschluss positiven Potentials (21) und den Anschluss negativen Potentials (22) miteinander verbindet und in dem ebenfalls mindestens eine elektrische Energiespeicherzelle (EZ) angeordnet ist; wobei
in dem ersten Strang (23) und dem zweiten Strang (24 - 26) jeweils mindestens ein Halbleiterschalterelement (27) angeordnet ist, das zur Unterbrechung eines in dem jeweiligen Strang fließenden Stromes ansteuerbar ist; und
der Fahrzeugenergiespeicher (2) weiterhin aufweist:
ein Strommesselement (28), das in dem ersten Strang (23) angeordnet ist;
ein Strommesselement (28), das in dem zweiten Strang (24 - 26) angeordnet ist;
eine dem ersten Stang (23) zugeordnete Strommessvorrichtung (29), die mit dem in dem ersten Strang (23) angeordneten Strommesselement (28) zur Messung des in dem ersten Strang (23) fließenden Stromes verbunden ist; und
eine dem zweiten Stang (24 - 26) zugeordnete Strommessvorrichtung (29), die mit dem in dem zweiten Strang (24 - 26) angeordneten Strommesselement (28) zur Messung des in dem zweiten Strang (24 - 26) fließenden Stromes verbunden ist; wobei
die dem ersten Strang (24 - 26) zugeordnete Strommessvorrichtung (29) eingerichtet ist, den in dem ersten Strang (23) fließenden Strom zu messen und das in dem ersten Strang (23) angeordnete Halbleiterschalterelement (27) zur Unterbrechung des fließenden Stromes anzusteuern, wenn der in dem ersten Strang (23) fließende Strom einen Schwellenwert übersteigt,
die dem zweiten Strang (24 - 26) zugeordnete Strommessvorrichtung (29) eingerichtet ist, den in dem zweiten Strang (24 - 26) fließenden Strom zu messen und das in dem zweiten Strang (24 - 26) angeordnete Halbleiterschalterelement (27) zur Unterbrechung des fließenden Stromes anzusteuern, wenn der in dem zweiten Strang (24 - 26) fließende Strom einen Schwellenwert übersteigt, **gekennzeichnet dadurch, dass**
die dem ersten Strang (23) zugeordnete Strommessvorrichtung (29) und die dem zweiten Strang (24 - 26) zugeordnete Strommessvorrichtung (29) jeweils einen eine Komparatorschaltung bildenden Operationsverstärker beinhaltet, der den über das jeweilige Strommesselement (28) gemessenen Strom mit dem Schwellenwert vergleicht und dessen Ausgangsignal das Halbleiterschalterelement (27) zur Unterbrechung des fließenden Stromes ansteuert, wenn der fließende Strom den Schwellenwert übersteigt; und wobei
der Fahrzeugenergiespeicher weiterhin aufweist:
eine Schaltanordnung (210), die in Reihe zu den zueinander parallel angeordneten Strängen angeordnet ist und eine einen Treiber beinhaltende Halbleitersteuerung (213) sowie mindestens ein weiteres Halbleiterschalterelement (214) aufweist, wobei die Halbleitersteuerung (213) eingerichtet ist, in Abhängigkeit von einem Steuersignal das weitere Halbleiterschalterelement (214) zur Unterbrechung eines gesamten durch den Fahrzeugenergiespeicher (2) fließenden Stromes anzusteuern,
wobei jede der Strommessvorrichtungen einen weiteren Operationsverstärker beinhaltet, der an seinen Eingängen so verschaltet ist, dass sein entsprechender, das Steuersignal ausgebende Ausgang bei Auftreten eines Kurzschlussstroms/Überstroms kippt und dadurch der Treiber der Halbleitersteuerung (213) das weitere Halbleiterschalterelement (214) zur Unterbrechung des gesamten Stromes ansteuert.

2. Fahrzeugenergiespeicher (2) gemäß Patentanspruch 1, wobei
in dem ersten und/oder zweiten Strang jeweils eine Vielzahl von Halbleiterschalterelementen (27) angeordnet ist, und die Vielzahl von Halbleiterschalterelementen (27) eine Gruppe parallel geschalteter Halbleiterschalterelemente (27) beinhaltet, die gemeinsam zur Unterbrechung des in dem jeweiligen Strang fließenden Stromes durch die jeweilige Strommessvorrichtung (29) angesteuert werden, wenn der in dem jeweiligen Strang fließende Strom den Schwellenwert übersteigt.

3. Kraftfahrzeug aufweisend einen Fahrzeugenergiespeicher (2) gemäß einem der Patentansprüche 1 bis 2.

## Claims

1. Vehicle energy storage device (2) for electrical supply of an electric drive unit (M) of a motor vehicle, which comprises:
a positive potential connection (21) and a negative potential connection (22), which are connected to the drive unit (M) during intended operation of the vehicle energy storage device;
a first string (23), which connects the positive potential connection (21) and the negative potential connection (22) to one another and in which at least one electrical energy storage cell (EZ) is arranged; and
a second string (24 - 26), which connects the positive potential connection (21) and the negative potential connection (22) to one another in parallel to the first string (23) and in which at least one electrical energy storage cell (EZ) is likewise arranged;
wherein
in the first string (23) and the second string (24 - 26) at least one semiconductor switching element (27) is respectively arranged, which is controllable to interrupt a current flowing in the respective string; and
the vehicle energy storage device (2) further comprises:
a current measuring element (28), which is arranged in the first string (23);
a current measuring element (28), which is arranged in the second string (24 - 26);
a current measuring device (29) associated with the first string (23), which is connected to the current measuring element (28) arranged in the first string (23) for measuring the current flowing in the first string (23); and
a current measuring device (29) associated with the second string (24 - 26), which is connected to the current measuring element (28) arranged in the second string (24 - 26) for measuring the current flowing in the second string (24 - 26); wherein
the current measuring device (29) associated with the first string (24 - 26) is configured to measure the current flowing in the first string (23) and to control the semiconductor switching element (27) arranged in the first string (23) to interrupt the flowing current when the current flowing in the first string (23) exceeds a threshold value,
the current measuring device (29) associated with the second string (24 - 26) is configured to measure the current flowing in the second string (24 - 26) and to control the semiconductor switching element (27) arranged in the second string (24 - 26) to interrupt the flowing current when the current flowing in the second string (24 - 26) exceeds a threshold value, **characterized in that**
the current measuring device (29) associated with the first string (23) and the current measuring device (29) associated with the second string (24 - 26) each include an operational amplifier forming a comparator circuit, which compares the current measured via the respective current measuring element (28) with the threshold value and whose output signal controls the semiconductor switching element (27) to interrupt the flowing current when the flowing current exceeds the threshold value;
and wherein
the vehicle energy storage device further comprises:
a switching arrangement (210), which is arranged in series with the strings arranged parallel to one another and has a semiconductor controller (213) including a driver as well as at least one further semiconductor switching element (214), wherein the semiconductor controller (213) is configured to control the further semiconductor switching element (214) in dependence on a control signal to interrupt a total current flowing through the vehicle energy storage device (2),
wherein each of the current measuring devices includes a further operational amplifier, which is connected at its inputs such that its corresponding output outputting the control signal switches upon occurrence of a short-circuit current/overcurrent and thereby the driver of the semiconductor controller (213) controls the further semiconductor switching element (214) to interrupt the total current.

2. Vehicle energy storage device (2) according to claim 1, wherein
in the first and/or second string a plurality of semiconductor switching elements (27) is respectively arranged, and the plurality of semiconductor switching elements (27) includes a group of semiconductor switching elements (27) connected in parallel, which are jointly controlled by the respective current measuring device (29) to interrupt the current flowing in the respective string when the current flowing in the respective string exceeds the threshold value.

3. Motor vehicle comprising a vehicle energy storage device (2) according to one of claims 1 to 2.

## Revendications

1. Accumulateur d'énergie de véhicule (2) pour l'alimentation électrique d'un groupe d'entraînement électrique (M) d'un véhicule automobile, qui comprend:
une connexion de potentiel positif (21) et une connexion de potentiel négatif (22), qui sont reliées au groupe d'entraînement (M) lors du fonctionnement conforme à la destination de l'accumulateur d'énergie de véhicule;
une première branche (23), qui relie entre elles la connexion de potentiel positif (21) et la connexion de potentiel négatif (22) et dans laquelle est disposée au moins une cellule d'accumulation d'énergie électrique (EZ); et
une deuxième branche (24 - 26), qui relie entre elles la connexion de potentiel positif (21) et la connexion de potentiel négatif (22) en parallèle à la première branche (23) et dans laquelle est également disposée au moins une cellule d'accumulation d'énergie électrique (EZ); dans lequel
dans la première branche (23) et la deuxième branche (24 - 26) est respectivement disposé au moins un élément de commutation à semi-conducteur (27), qui peut être commandé pour interrompre un courant circulant dans la branche respective ; et
l'accumulateur d'énergie de véhicule (2) comprend en outre:
un élément de mesure de courant (28), qui est disposé dans la première branche (23);
un élément de mesure de courant (28), qui est disposé dans la deuxième branche (24 - 26);
un dispositif de mesure de courant (29) associé à la première branche (23), qui est relié à l'élément de mesure de courant (28) disposé dans la première branche (23) pour mesurer le courant circulant dans la première branche (23); et
un dispositif de mesure de courant (29) associé à la deuxième branche (24 - 26), qui est relié à l'élément de mesure de courant (28) disposé dans la deuxième branche (24 - 26) pour mesurer le courant circulant dans la deuxième branche (24 - 26); dans lequel
le dispositif de mesure de courant (29) associé à la première branche (24 - 26) est configuré pour mesurer le courant circulant dans la première branche (23) et pour commander l'élément de commutation à semi-conducteur (27) disposé dans la première branche (23) pour interrompre le courant circulant lorsque le courant circulant dans la première branche (23) dépasse une valeur seuil,
le dispositif de mesure de courant (29) associé à la deuxième branche (24 - 26) est configuré pour mesurer le courant circulant dans la deuxième branche (24 - 26) et pour commander l'élément de commutation à semi-conducteur (27) disposé dans la deuxième branche (24 - 26) pour interrompre le courant circulant lorsque le courant circulant dans la deuxième branche (24 - 26) dépasse une valeur seuil, **caractérisé en ce que**
le dispositif de mesure de courant (29) associé à la première branche (23) et le dispositif de mesure de courant (29) associé à la deuxième branche (24 - 26) comprennent respectivement un amplificateur opérationnel formant un circuit comparateur, qui compare le courant mesuré par l'intermédiaire de l'élément de mesure de courant (28) respectif avec la valeur seuil et dont le signal de sortie commande l'élément de commutation à semi-conducteur (27) pour interrompre le courant circulant lorsque le courant circulant dépasse la valeur seuil; et dans lequel l'accumulateur d'énergie de véhicule comprend en outre:
un agencement de commutation (210), qui est disposé en série avec les branches disposées en parallèle l'une par rapport à l'autre et présente une commande à semi-conducteur (213) comprenant un pilote ainsi qu'au moins un autre élément de commutation à semi-conducteur (214), la commande à semi-conducteur (213) étant configurée pour commander l'autre élément de commutation à semi-conducteur (214) en fonction d'un signal de commande pour interrompre un courant total circulant à travers l'accumulateur d'énergie de véhicule (2),
dans lequel chacun des dispositifs de mesure de courant comprend un autre amplificateur opérationnel, qui est connecté à ses entrées de sorte que sa sortie correspondante délivrant le signal de commande bascule lors de l'apparition d'un courant de court-circuit/surintensité et que, de ce fait, le pilote de la commande à semi-conducteur (213) commande l'autre élément de commutation à semi-conducteur (214) pour interrompre le courant total.

2. Accumulateur d'énergie de véhicule (2) selon la revendication 1, dans lequel dans la première et/ou deuxième branche est respectivement disposée une pluralité d'éléments de commutation à semi-conducteur (27), et la pluralité d'éléments de commutation à semi-conducteur (27) comprend un groupe d'éléments de commutation à semi-conducteur (27) connectés en parallèle, qui sont commandés conjointement par le dispositif de mesure de courant (29) respectif pour interrompre le courant circulant dans la branche respective lorsque le courant circulant dans la branche respective dépasse la valeur seuil.

3. Véhicule automobile comprenant un accumulateur d'énergie de véhicule (2) selon l'une des revendications 1 à 2.
